# EUROPÄISCHE PATENTSCHRIFT

(11) **EP 2 651 999 B1**
(45) Veröffentlichungstag und Bekanntmachung des Hinweises auf die Patenterteilung: **10.05.2017**
(21) Anmeldenummer: 11797230.7
(22) Anmeldetag: 13.12.2011
(51) Int. Cl.: C08G 18/20, C08K 3/34, C08G 18/10

(54) **POLYISOCYANAT-POLYADDITIONSPRODUKTE, EIN VERFAHREN ZU IHRER HERSTELLUNG UND IHRE VERWENDUNG**
POLYISOCYANATE POLYADDITION PRODUCTS, A PROCESS FOR PREPARATION THEREOF AND USE THEREOF
PRODUITS DE POLYADDITION DE POLYISOCYANATE, LEUR PROCÉDÉ DE FABRICATION ET LEUR UTILISATION

(30) Priorität: 16.12.2010 EP 10306434
(43) Veröffentlichungstag der Anmeldung: 23.10.2013
(73) Patentinhaber: Covestro Deutschland AG, 51373 Leverkusen (DE)
(72) Erfinder: KRAUSE, Jens, 51375 Leverkusen (DE)
(74) Vertreter: Levpat
(86) Internationale Anmeldenummer: PCT/EP2011/072577
(87) Internationale Veröffentlichungsnummer: WO 2012/080226

(56) Entgegenhaltungen:
- EP-A1- 1 489 119
- DE-A1- 3 718 935
- DE-A1-102007 009 128
- US-A- 4 431 753
- US-A1- 2007 010 644

## Beschreibung

Die Erfindung betrifft Polyisocyanat-Polyadditionsprodukte, ein Verfahren zu ihrer Herstellung und ihre Verwendung.

Polyurethane sind seit langem bekannt und werden in vielen Bereichen eingesetzt. Häufig muss die eigentliche Polyurethanreaktion unter Verwendung von Katalysatoren durchgeführt werden, da ansonsten die Reaktion zu langsam abläuft und gegebenenfalls zu Polyurethanprodukten mit schlechten mechanischen Eigenschaften führt. In den meisten Fällen muss die Reaktion zwischen der Hydroxylkomponente (NCO-reaktiven Gruppe, OH-Gruppe) und der NCO-Komponente katalysiert werden. Bei den gebräuchlichen Katalysatoren wird zwischen metallhaltigen und nichtmetallhaltigen Katalysatoren unterschieden. Typische gebräuchliche Katalysatoren sind beispielsweise Aminkatalysatoren, wie beispielsweise 1,4-Diazabicyclo[2.2.2]octan (DABCO) oder Triethanolamin sowie Amidinkatalysatoren, wie etwa 1,8-Diazabicyclo[5.4.0]undec-7-en (DBU). Bei metallhaltigen Katalysatoren handelt es sich meist um Lewissäureverbindungen, wie etwa Dibutylzinndilaurat, Bleioctoat, Zinnoctoat, Titan- und Zirkoniumkomplexe, aber auch Cadmium-, Bismut- (beispielsweise Bismutneodecanoat) und Eisenverbindungen. Eine Anforderung an den Katalysator ist, dass dieser möglichst definiert nur eine der vielfältigen Polyurethanreaktionen katalysiert, wie etwa nur die Reaktion zwischen OH- und NCO-Gruppen. Nebenreaktionen, wie z.B. Di- oder Trimerisierungen des Isocyanates, Allophanatisierungen, Biuretisierungen, Wasserreaktionen oder Harnstoffbildungen sollten hierbei nicht katalysiert werden. Die Anforderung geht immer dahin, dass ein optimaler Katalysator exakt die Reaktion katalysiert, die gerade gewünscht ist; beispielsweise nur die Wasserreaktion, so dass ein definiertes Schäumprofil entsteht oder, wie bei Verwendung der Kaliumacetate, bevorzugt die Polyisocyanuratreaktion. Bis jetzt gibt es jedoch kaum Katalysatoren, die nur eine definierte Reaktion katalysieren. Dies ist aber gerade bei den vielfältigen Reaktionsmöglichkeiten bei der Polyurethanherstellung äußerst wünschenswert. Besonders interessant sind nicht nur Katalysatoren, die definiert nur eine Reaktion katalysieren, sondern Katalysatoren, die zusätzlich gezielt aktiv werden und nur unter bestimmten Bedingungen Reaktionen katalysieren. In solchen Fällen spricht man von schaltbaren Katalysatoren. Diese schaltbaren Katalysatoren werden wiederum in thermisch, photochemisch, chemisch (z.B. über Dissoziation) oder optisch schaltbare unterteilt. Allgemein wird hierbei auch von latenten Katalysatoren gesprochen und im thermischen Fall von thermolatenten Katalysatoren. Diese Katalysatoren ruhen bis die Reaktionsmischung eine bestimmte Temperatur erreicht. Oberhalb dieser Temperatur sind sie dann aktiv, bevorzugt schlagartig aktiv. Diese latenten Katalysatoren ermöglichen lange Topfzeiten und schnelle Entformungszeiten.

Die bis heute bekannten und bevorzugt eingesetzten latenten Katalysatoren sind Quecksilberverbindungen. Der prominenteste Vertreter ist hierbei das Phenylquecksilberneodecanoat (Thorcat^{®} 535 und Cocure^{®} 44). Dieser Katalysator offenbart ein latentes Reaktionsprofil, wobei der Katalysator anfangs nahezu inaktiv ist und erst nach langsamer Erwärmung der Mischung, meist aufgrund der Exothermie der unkatalysierten Umsetzung von NCO- mit OH-Gruppen, bei einer bestimmten Temperatur (meist um die 70°C) schlagartig aktiv wird. Bei Einsatz dieses Katalysators können sehr lange Offenzeiten bei sehr kurzen Aushärtezeiten erreicht werden. Dies ist besonders dann vorteilhaft, wenn sehr viel Material ausgetragen werden muss (z.B. eine große Form gefüllt werden muss) und nach erfolgter Austragung die Reaktion schnell und damit wirtschaftlich beendet werden soll.

Ein besonderer Vorteil der latenten Katalysatoren ist darin zu sehen, dass sie im fertigen Polyurethan-Werkstoff infolge ihrer mit sinkender Temperatur abnehmenden katalytischen Wirkung die Spaltung von Urethangruppen z.B. bei Raumtemperatur im Vergleich zu konventionellen Katalysatoren nur wenig beschleunigen. Sie tragen somit zu günstigen Dauergebrauchseigenschaften der Polyurethane bei.

Darüber hinaus ist beim Einsatz von Katalysatoren allgemein darauf zu achten, dass die physikalischen Eigenschaften der Produkte möglichst nicht negativ beeinflusst werden. Dies ist auch der Grund, warum eine gezielte Katalyse einer bestimmten Reaktion so wichtig ist. Gerade bei der Herstellung von Elastomeren, insbesondere von Gießelastomeren ist der Einsatz von Quecksilberkatalysatoren sehr stark verbreitet, da sie breit einsetzbar sind, nicht mit zusätzlichen Katalysatoren kombiniert werden müssen und sehr gezielt die Reaktion zwischen OH- und NCO-Gruppen katalysieren. Einziger - dafür aber sehr bedeutender Nachteil - ist die hohe Toxizität der Quecksilberverbindungen, so dass große Anstrengungen unternommen werden, Alternativen für die Quecksilberkatalysatoren zu finden. Darüber hinaus sind diese Verbindungen in einigen Industrien unerwünscht (Automobil-, Elektroindustrie).

Systeme, die zumindest weniger toxisch als Quecksilberkatalysatoren sind, z.B. auf Basis von Zinn, Zink, Bismut, Titan oder Zirkonium, aber auch Amidin- und Aminkatalysatoren, sind im Markt zwar bekannt, weisen bis heute jedoch nicht die Robustheit und Einfachheit der Quecksilberverbindungen auf und sind zudem nicht oder zu wenig latent.

In WO 2008/018601 wird die Verwendung von Katalysatoren beschrieben, die auf Abmischungen aus Aminen, cyclischen Stickstoffverbindungen, Carboxylaten und/oder quarternären Ammoniumsalzen basieren. Derartige Abmischungen besitzen aber die dem Fachmann bekannten Nachteile. Während Amine und cyclische Stickstoffverbindungen unmittelbar aktivierend wirken und somit eine für bestimmte Anwendungen nicht ausreichende Latenz mit sich bringen, katalysieren Carboxylate und quartärnere Ammoniumsalze z.B. auch die Polyisocyanuratreaktion, was bei bestimmten Anwendungen, z.B. Hochleistungs-Elastomeren, unbedingt ausgeschlossen werden muß.

Bestimmte Kombinationen von Katalysatoren bewirken, dass die Gelreaktion weitestgehend von der Aushärtungsreaktion getrennt erfolgt, da viele dieser Katalysatoren nur selektiv agieren. Beispielsweise wird Bismut(III)neodecanoat mit Zinkneodecanoat kombiniert. Oft wird noch zusätzlich 1,8-Diazabicyclo[5.4.0]undec-7-en zugegeben. Obwohl diese Kombination zu den bekanntesten gehört, ist sie leider nicht so breit und universell einsetzbar wie z.B. Thorcat^{®} 535 (Fa. Thor Especialidades S.A.) und ist darüber hinaus anfällig bei Rezepturschwankungen. Die Verwendung dieser Katalysatoren ist in DE-A 10 2004 011 348 beschrieben. Weitere Kombinationen von Katalysatoren sind in US-A 3714077, US-A 4584362, US-A 5011902, US-A 5902835 und US-A 6590057 offenbart.

In WO 2005/058996 wird die Kombination von Titan- und Zirkoniumkatalysatoren mit Bismutkatalysatoren beschrieben. Ein entscheidender Nachteil der beschriebenen Katalysatorkombinationen ist jedoch, dass sie nicht so breit und universell einsetzbar sind wie die Quecksilberkatalysatoren und anfällig bei Rezepturschwankungen sind.

Auch die in WO 2008/155569 beschriebenen Titan-Katalysatoren sind gegenüber den Quecksilberkatalysatoren mit einigen Nachteilen behaftet. Für akzeptable Ergebnisse ist der Zusatz eines aminbasierten Co-Katalysators nötig. Bei diesem handelt es sich um einen Trimerisierungs-Katalysator, was in bestimmten Anwendungen (z.B. Gießelastomeren) negative Auswirkungen auf die physikalischen Eigenschaften der Polyurethane hat. Durch eine Variation des Mischungsverhältnisses der Katalysator-Komponenten können entweder eine sehr gute Latenz oder sehr gute Materialeigenschaften erzielt werden, nicht jedoch beides gleichzeitig. Die beschriebenen Katalysatorkombinationen müssen folglich bzgl. ihres Mischungsverhältnisses auf die jeweiligen Anforderungen abgestimmt werden, d.h. man kann mit einer Katalysatorkombination nicht alle Anwendungen abdecken, was einen entscheidenden Nachteil darstellt.

Bei dem im Markt erhältlichen Produkt DABCO DC-2 der Fa. Air Products Chemicals Europe B.V. handelt es sich um eine Katalysatormischung aus 1,4-Diazabicyclo[2.2.2]octan (DABCO) und Dibutylzinndiacetat. Der Nachteil dieser Mischung ist, dass das Amin unmittelbar aktivierend wirkt. Alternative Systeme sind beispielsweise POLYCAT^{®} SA-1/10 (Fa. Air Products Chemicals Europe B.V.). Hierbei handelt es sich um mit Phenol blockiertes DBU. Obwohl dieses System thermolatent ist, werden derartige Systeme wegen ihrer schlechten katalytischen Wirkung bei der Aushärtung nicht verwendet; die in Gegenwart dieser Systeme hergestellten Elastomere bleiben am Ende der Reaktion klebrig; man spricht auch vom "Verhungern" der Reaktion. Ein Nachteil hierbei ist vermutlich die zu starke Blockierung durch das Phenol, so dass die Schaltemperatur viel zu hoch ist (laut Hersteller liegt diese bei 80°C).

In WO 2009/050115 werden photolatente Katalysatoren beschrieben, die allerdings mehrere bedeutende Nachteile aufweisen. Massive Formteile werden in der Regel in nicht-transparenten Metallformen hergestellt, wodurch eine Aktivierung der photolatenten Katalysatoren durch eine externe Strahlenquelle praktisch unmöglich ist. Selbst bei einer technischen Lösung dieses Problems ergibt sich ein weiterer, inhärenter Nachteil aus der begrenzten Eindringtiefe der elektromagnetischen Strahlung in die Reaktionsmischung.

In DE-A 10 2008 026 341 werden thermolatente Katalysatoren auf Basis N-heterocyclischer Carbene beschrieben, die allerdings einige bedeutende Nachteile aufweisen. Die Herstellung der Verbindungen ist sehr aufwendig und damit teuer, was den Einsatz der Katalysatoren in den meisten Anwendungen wirtschaftlich uninteressant macht. Des Weiteren katalysieren die Verbindungen in bestimmten Polyurethan-Systemen auch die Polyisocyanuratreaktion, was bei bestimmten Anwendungen, z.B. Hochleistungs-Elastomeren, unbedingt ausgeschlossen werden muss.

In DE-A 10 2008 021 980 werden thermolatente Zinnkatalysatoren beschrieben, die allerdings einen bedeutenden Nachteil aufweisen. In Polyurethan-Reaktionsmischungen, die einen bestimmten Gehalt an reaktiven NCO-Gruppen unterschreiten, reicht die Exothermie der unkatalysierten Umsetzung von NCO- mit OH-Gruppen für die volle Aktivierung der thermolatenten Katalysatoren nicht aus. Dies gilt insbesondere für dünnwandige Formteile, bei deren Aushärtung aufgrund des großen Verhältnisses Oberfläche zu Volumen nur relativ niedrige Temperaturen erreicht werden.

Bekannt ist ebenfalls, dass die Quecksilber katalysierte thermolatente Reaktion über so genannte Schalttemperaturen abläuft. Die Schalttemperatur eines Katalysators wird von den Katalysatorherstellern als eine der wichtigen Produkteigenschaften angesehen (*TEDA & TOYOCAT TECHNICAL DATA No. EE-003 (Issue Date 09-02-2004)).* Beispielsweise ermittelt die Firma Tosoh Corporation diese Schalttemperatur mit Hilfe der Differential-Thermoanalyse (DSC), indem eine den Katalysator enthaltende Reaktionsmischung auf Basis von Polyethersystemen mit einer Heizrate von 5 °C/min im Temperaturintervall von 30 °C bis 250 °C aufgeheizt wird. Die Temperatur, bei der die maximale Exothermie auftritt, wird in der Regel als Schalttemperatur (Deblockierungstemperatur) angegeben. Die Anfangstemperatur ist die Temperatur, bei der die exotherme Reaktion einsetzt (Beginn der Exothermie). Hier hat Quecksilber den großen Vorteil, dass die Schalttemperatur des Quecksilbers sich über einen sehr breiten Bereich mit einem Beginn bei 37,4°C und einem Ende von 93,9°C (Angabe ebenfalls Tosoh) erstreckt, so dass die Reaktion am Ende nicht "verhungert" und aber auch am Anfang nicht zu früh anzieht. Handelsübliche Amine (wie etwa DABCO, als unblockiertes Amin) beginnen entweder < 37,4°C, was zu einer verfrühten Vernetzung ohne ausreichende Vernetzung am Ende führt. Somit kommt es zu keiner vollständigen Aushärtung.

Alternativ beginnen andere handelsübliche blockierte Amidine wie etwa Polycat SA 1/10 mit 80°C viel zu spät, so dass es am Anfang der Reaktion zu ungezielten Reaktionen, da unkatalysiert kommt. Die Verarbeitungszeit ist viel zu lang und es kommt zu einem vergelen der Reaktion bevor eine vollständige Aushärtung stattfindet.

Eine relativ neue Lösung (DE1020100065.0; unveröffentlichte deutsche Anmeldung) ist die Kombination von mindestens zwei schaltbaren, blockierten Aminen bzw. Amidinen, wobei die sogenannte Anfangstemperatur des einen bei niedriger Schalttemperatur schaltenden Amins und/oder Amidins (T_{A}) zwischen 30° und 60°C liegt und die sogenannte Schalttemperatur des anderen bei höherer Schalttemperatur schaltenden Amins und/oder Amidins (Tₘₐₓ) zwischen 80°C und 150°C liegt und die Differenz zwischen T_{A} und Tₘₐₓ mindestens 20°C und höchstens 100°C beträgt. Ein Nachteil hierbei ist jedoch, dass unterschiedliche Katalysatoren zu unterschiedlichen Zeitpunkten reagieren. Dies ist besonders bei, wie es häufig bei massiven Gießelastomeren vorliegt, komplexen massiven Elastomerformteilen ein Nachteil. Dünne Schichten, welche im Kontakt mit der heißen Form sind, härten sofort, teilweise schlagartig aus, während andere Stellen, die nicht in Kontakt mit der heißen Form sind, deutlich länger brauchen, um auszuhärten. Somit kommt es im fertigen Elastomer zu unterschiedlichen Zonen, Schlieren und somit unterschiedlichen Eigenschaften, da die Katalysatoren zu unterschiedlichen Zeitpunkten deblockieren. An Stellen, an denen kein Kontakt mit der heißen Form vorliegt, kommt es zu keiner Aushärtung, da der höher schaltende Katalysator seine Deblockierungstemperatur nicht erreicht.

EP 0 989 146 beschreibt die Verwendung eines Katalysators aus einer organischen Dicarbonsäure (HOOC-(CH₂)n-COOH) und einem tertiären Amin. Derartige Katalysatoren zeigen in Schäumen eine ausreichende Latenz, in Gießelastomeren schalten sie jedoch zu uneinheitlich, so dass diese Katalysatoren kommerziell nicht einsetzbar sind.

Aufgabe war es daher, Systeme und Katalysatoren zur Verfugung zu stellen, mit denen es möglich ist, Polyisocyanat-Polyadditionsprodukte mit guten mechanischen Eigenschaften herzustellen, und die anfangs eine stark verzögerte und nach dieser Anfangsphase eine beschleunigte Reaktion zum Endprodukt zeigen. Das System und der Katalysator sollten zudem frei von toxischen Schwermetallen, wie Cadmium, Quecksilber und Blei sein. Zudem sollten die mechanischen Eigenschaften der Polyisocyanat-Polyadditionsprodukte mindestens auf dem Niveau der mit Quecksilberkatalysatoren erhaltenen liegen. Auch sollte das System so gewählt sein, dass keine Wasserreaktionen katalysiert werden und dass der Katalysator bevorzugt im Polyol gelöst eingesetzt werden kann. Ferner sollte er im Polyol lagerstabil sein.

Diese Aufgabe konnte überraschenderweise durch die erfindungsgemäßen Polyisocyanat-Polyadditionsprodukte gelöst werden.

Gegenstand der Erfindung sind Polyisocyanat-Polyadditionsprodukte mit guten mechanischen Eigenschaften, erhältlich aus
a) Polyisocyanaten und
b) NCO-reaktiven Verbindungen aus der Gruppe der b1) langkettigen Polyesterpolyole mit einer OH-Zahl von 27 bis 112 mg KOH/g und einer Funktionalität von 1,9 bis 2,3 und b2) kurzkettigen Hydroxylverbindungen mit einer OH-Zahl von 300 bis 1810 mg KOH/g und einer Funktionalität von 1,9 bis 2,3
   in Gegenwart von
c) einem latenten Katalysator
d) gegebenenfalls weiteren von c) verschiedenen Katalysatoren und/oder Aktivatoren unter Zusatz von
e) gegebenenfalls Füllstoffen und/oder Fasermaterialien
f) gegebenenfalls Hilfs- und/oder Zusatzmitteln,
g) gegebenenfalls Treibmitteln
h) mindestens einem Wasserfänger,
dadurch gekennzeichnet, dass als latenter Katalysator (c) mit Monocarbonsäure blockierte Amidine in einer Menge von 20 bis 400 ppm, bezogen auf Komponente b1), eingesetzt werden, wobei das Molverhältnis von Amidin zu Carbonsäure zwischen 1 : 3 bis 1 : 0,5 liegt.

Das Verhältnis von NCO-reaktiven Gruppen zu NCO-Gruppen liegt bevorzugt im Bereich von 0,9:1 bis 1,25:1, besonders bevorzugt im Bereich von 0,92:1 bis 1,0:1, ganz besonders bevorzugt im Bereich von 0,94:1 bis 0,98:1.

Die Polyisocyanat-Polyadditionsprodukte sind schnell und gut entformbar und weisen gute mechanische Eigenschaften auf. Bevorzugt werden ungeschäumte, massive Gießelastomere hergestellt. Die Gießzeit (einer 400 g Reaktionsmischung in einem Plastikbecher) der erfindungsgemäßen Polyisocyanat-Polyadditionsprodukte liegt im Bereich von 2 bis 10 Minuten. Bevorzugt liegt die Härte der Polyisocyanat-Polyadditionsprodukte im Bereich von 50 bis 96 Shore A, besonders bevorzugt im Bereich von 60 bis 96 Shore A, ganz besonders bevorzugt im Bereich von 60 bis 85 Shore A.

Als Katalysatoren (d) werden vorzugsweise Metallkatalysatoren eingesetzt. Als typische Metallkatalysatoren kommen beispielsweise Salze und Organoverbindungen der Elemente Zirkonium, Titan, Zinn, Kupfer, Blei, Bismuth, Zink in Frage.

Der latente Katalysator wird in einer Menge von 20 bis 400 ppm (parts per million, Gewichtsteile auf eine Millionen Gewichtsteile), bezogen auf (b1) eingesetzt, bevorzugt in einer Menge von 50 bis 350 ppm, besonders bevorzugt von 80 bis 300 ppm, bezogen auf Komponente b1).

Als Ausgangsverbindungen für die eingesetzten latenten Katalysatoren (c) werden Amidine, wie z.B. 1,8-Diazabicyclo[5.4.0]undec-7-en (DBU) und Diazabicyclo[4.3.0]non-5-en (DBN) und Säuren der Struktur R-COOH (mit R als Platzhalter für gesättigte und ungesättigte Alkyl- und Cycloalkylreste und Arylreste, deren Wasserstoffatome z.B. durch Halogenatome und OH-Gruppen substituiert sein können), wie beispielsweise 2-Ethylhexansäure, Ameisensäure, Essigsäure, Methacrylsäure, Trifluoressigsäure, Crotonsäure, Isocrotonsäure, Isophthalsäure, Methacrylsäure, Benzoesäure, Cyanessigsäure, 5-Hydroxy-isophthalsäure, Methylsalicylsäure, eingesetzt. Besonders bevorzugt werden Monoalkencarbonsäuren eingesetzt. Umsetzungsprodukte aus einem Mol DBU und einem Mol einer Alkenmonocarbonsäure, wie z.B. Crotonsäure, Isocrotonsäure oder Methacrylsäure sind besonders bevorzugt. Ein besonders bevorzugter Katalysator ist das Umsetzungsprodukt aus DBU und Isocrotonsäure.

Bevorzugt wird ein etwa äquimolares Verhältnis aus Säure und Amidin verwendet, so dass der pH Wert des Katalysators nicht deutlich unter 7 ist, da dies ansonsten zu Korrosion bei der Anwendung in Anlagen führt, und nicht deutlich über 7 ist, so dass Teile des Amidins unblockiert vorliegen und somit keine Latenz vorliegt.

Der sogenannte Schaltbereich des eingesetzten latenten Katalysators liegt bei einer Anfangstemperatur von 30°C bis 150°C, wobei die Deblockierungstemperatur zwischen 60 und 90°C liegt. Bevorzugt liegt die Deblockierungstemperatur zwischen 70 und 85°C. Bevorzugt liegt die Endtemperatur zwischen 120°C und 140°C.

Als Wasserfänger (h) können Wasserfänger bzw. Trocknungsmittel, wie z.B. Silicagel oder Zeolithe eingesetzt werden. Alternative, weniger bevorzugte Trocknungsmittel sind z.B. anorganische Salze, wie z.B. Natriumsulfat, Magnesiumsulfat, Calciumchlorid und Natriumchlorid, Phosphoroxide und Alkoxysilane. Ganz besonders bevorzugt werden als Wasserfänger (h) Zeolithe eingesetzt, die bevorzugt der Kompentente zugegeben, welche den Katalysator (c) enthält. Besonders bevorzugt werden der latente Katalysator (c) und der Wasserfänger (h) den NCO-reaktiven Verbindungen (b) zugegeben. Bevorzugt liegt der Wasserfänger (h) in einer Menge von 0,1 bis 5 Gew.-% bezogen auf Komponente (b1) vor.

Ein weiterer Gegenstand der Erfindung ist ein Verfahren zur Herstellung der erfindungsgemäßen Polyisocyanat-Polyadditionsprodukte, wobei
a) Polyisocyanate mit
b) NCO-reaktiven Verbindungen aus der Gruppe der b1) langkettigen Polyesterpolyole mit einer OH-Zahl von 27 bis 112 mg KOH/g und einer Funktionalität von 1,9 bis 2,3 und b2) kurzkettigen Hydroxylverbindungen mit einer OH-Zahl von 300 bis 1810 mg KOH/g und einer Funktionalität von 1,9 bis 2,3
   in Gegenwart von
c) einem latenten Katalysator
d) gegebenenfalls weiteren von c) verschiedenen Katalysatoren und/oder Aktivatoren unter Zusatz von
e) gegebenenfalls Füllstoffen und/oder Fasermaterialien
f) gegebenenfalls Hilfs- und/oder Zusatzmitteln,
g) gegebenenfalls Treibmitteln
h) mindestens einem Wasserfänger umgesetzt werden,
dadurch gekennzeichnet, dass als latenter Katalysator (c) mit Monocarbonsäure blockierte Amidine in einer Menge von 20 bis 400 ppm, bezogen auf Komponente b1), eingesetzt werden, wobei das Molverhältnis von Amidin zu Carbonsäure zwischen 1 : 3 bis 1 : 0,5 liegt.

In einer bevorzugten Verfahrensvariante wird der blockierte Amidinkatalysator über die NCO-reaktiven Verbindungen b) sowie der gegebenenfalls vorhandene Katalysator (d) separat, z.B. über den Mischkopf zugegeben.

Ein weiterer Gegenstand der Erfindung ist die Verwendung der latenten Katalysatoren zur Herstellung von Polyisocyanat-Polyadditionsprodukten, speziell Polyurethanelastomeren, sowie Beschichtungen, Kleb- und Dichtstoffen, Harzen und Bindemitteln, bevorzugt Polyurethan-Gießelastomeren, besonders bevorzugt massiven Polyurethan-Gießelastomeren .

Die massiven Polyurethan-Gießelastomere werden vorzugsweise für die Herstellung von Sieben, Molchen, Rollen, Rädern, Walzen, Abstreifern, Platten, Zyklonen, Förderbändern, Rakeln, Kupplungen, Dichtungen, Bojen und Pumpen verwendet. Sie weisen bevorzugt Härten im Bereich von 50 bis 96 Shore A, besonders bevorzugt im Bereich von 60 bis 96 Shore A, ganz besonders bevorzugt im Bereich von 60 bis 85 Shore A auf.

Die für die Herstellung der Polyisocyanat-Polyadditionsverbindungen geeigneten Polyisocyanate (a) sind die dem Fachmann an sich bekannten organischen aliphatischen, cycloaliphatischen, aromatischen oder heterocyclischen Polyisocyanate mit mindestens zwei Isocyanatgruppen pro Molekül sowie Gemische davon. Beispiele für geeignete aliphatische bzw. cycloaliphatische Polyisocyanate sind Di- oder Triisocyanate, wie z.B. Butandiisocyanat, Pentandüsocyanat, Hexandiisocyanat (Hexamethylendiisocyanat, HDI), 4-Isocyanatomethyl-1,8-octandüsocyanat (Triisocyanatononan, TIN) und cyclische Systeme, wie z.B. 4,4'-Methylen-bis(cyclohexylisocyanat), 3,5,5-Trimethyl-1-isocyanato-3-isocyanatomethylcyclohexan (Isophorondiisocyanat, IPDI), sowie ω.ω'-Diisocyanato-1,3-dimethylcyclohexan (H₆XDI). Als aromatische Polyisocyanate können z.B. 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3-Bis(isocyanatomethyl)-benzol (XDI) eingesetzt werden. Des Weiteren können TODI (3,3'-Dimethyl-4,4'-biphenyldiisocyanat), PPDI (1,4-Paraphenylendüsocyanat) und CHDI (Cyclohexyldiisocyanat) verwendet werden.

Überdies können aber auch die an sich bekannten Folgeprodukte der vorgenannten organischen aliphatischen, cycloaliphatischen, aromatischen oder heterocyclischen Polyisocyanate mit Carbodiimid, Uretonimin-, Uretdion-, Allophanat-, Biuret- und/oder Isocyanurat-Struktur, sowie Prepolymere, die durch Umsetzung des Polyisocyanats mit Verbindungen mit gegenüber Isocyanatgruppen reaktiven Gruppen erhalten werden, eingesetzt werden.

Auch kann die Polyisocyanatkomponente (a) in einem geeigneten Lösungsmittel vorliegen. Geeignete Lösemittel sind solche, die eine ausreichende Löslichkeit der Polyisocyanatkomponente aufweisen und frei von gegenüber Isocyanaten reaktiven Gruppen sind. Beispiele für solche Lösungsmittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA).

Die Isocyanatkomponente kann darüber hinaus übliche Hilfs- und Zusatzmittel, wie z.B. Rheologieverbesserer (zum Beispiel Ethylencarbonat, Propylencarbonat, dibasische Ester, Zitronensäureester), Stabilisatoren (zum Beispiel Broenstedt- und Lewis-Säuren, wie etwa Salzsäure, Phosphorsäure, Benzoylchlorid, Organomineralsäuren wie Dibutylphosphat, weiterhin Adipinsäure, Äpfelsäure, Bernsteinsäure, Traubensäure oder Zitronensäure), UV-Schutzmittel (zum Beispiel 2,6-Dibutyl-4-methylphenol), Hydrolyseschutzmittel (zum Beispiel sterisch gehinderte Carbodiimide), Emulgatoren, gegebenenfalls in das später zu bildende Polyurethan einbaufähige Farbstoffe (die also über Zerewitinoff-aktive Wasserstoffatome verfügen) und/oder Farbpigmente enthalten.

Bei den Polyisocyanaten (a) handelt es sich bevorzugt um lösemittelfreie NCO-Prepolymere aus Diphenylmethandiisocyanat (MDI) und carbodiimidisiertem/uretoniminisiertem Diphenylmethandiisocyanat und/oder allophanatisiertem MDI. Besonders bevorzugt liegt der Gehalt des carbodümidisierten/uretoniminisierten Diphenylmethandiisocyanat und/oder allophanatisierten MDI im Prepolymer im Bereich von 0,02 bis 6,5 Gew.-%, ganz besonders bevorzugt im Bereich von 0,4 bis 5 Gew.-%, noch mehr bevorzugt im Bereich von 0,7 bis 2,5 Gew.-%. Das 4,4'-Isomere des MDI ist bevorzugt in Anteilen von 80 bis 100 Gew.-%, besonders bevorzugt von 95 bis 100 Gew.-% enthalten. Bevorzugt handelt es sich um Prepolymere auf Basis von Polyesterpolyolen, besonders bevorzugt auf Basis von Polyadipatpolyolen, ganz besonders bevorzugt auf Basis von Poly(butylen-co-ethylenadipat)polyolen. Die NCO-Gehalte liegen bevorzugt im Bereich von 12 bis 22 Gew.-%, besonders bevorzugt im Bereich von 14 bis 20 Gew.-%, ganz besonders bevorzugt im Bereich von 15 bis 17 Gew.-%.

Als NCO-reaktive Verbindungen (b) können alle dem Fachmann bekannten Verbindungen eingesetzt werden, welche eine mittlere OH-Funktionalität von mindestens 1,5 aufweisen. Dies können beispielsweise niedermolekulare Polyole b2) wie zum Beispiel Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, aber auch höhermolekulare Polyesterpolyole b1).

Polyesterpolyole können in bekannter Weise durch Polykondensation von niedermolekularen Polycarbonsäurederivaten, wie beispielsweise Bernsteinsäure, Glutarsäure, Adipinsäure, Korksäure, Azelainsäure, Sebacinsäure, Dodekandisäure, Tetrahydrophthalsäureanhydrid, Hexahydro-phthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Geeignete Radikalinitiatoren sind die aus der Gruppe der Azoverbindungen, wie zum Beispiel Azöisobutyronitril (AIBN), oder aus der Gruppe der Peroxide, wie beispielsweise Di-tert.-butylperoxid.

Bei den NCO-reaktiven Verbindungen b1) (langkettige Polyole) handelt es sich um Polyesterpolyole mit OH-Zahlen von 27 bis 112 mg KOH/g, ganz besonders bevorzugt von 40 bis 80 mg KOH/g, noch mehr bevorzugt von 50 bis 70 mg KOH/g. Die Funktionalitäten liegen im Bereich von 1,9 bis 2,3, besonders bevorzugt im Bereich von 1,95 bis 2,2, ganz besonders bevorzugt im Bereich von 2,0 bis 2,15, besonders bevorzugt im Bereich von 2,02 bis 2,09. Bevorzugt werden lösemittelfreie Polyole verwendet.

Bei den kurzkettigen, NCO-reaktiven Hydroxylverbindungen b2) handelt es sich bevorzugt um kurzkettige Diole, wie z.B. 1,2-Ethandiol, 1,2-Propandiol, 1,3-Propandiol, 1,3-Butandiol, 1,4-Butandiol, 2,3-Butandiol, 1,5-Pentandiol, 1,6-Hexandiol, HQEE (Hydrochinon-di(β-hydroxyethyl)ether), HER (Resorcin-di(β-hydroxyethyl)ether). Weniger bevorzugt sind Triole (z.B. Glycerin, Trimethylolpropan) und/oder Tetraole (z.B. Pentaerythrit). Besonders bevorzugt werden als kurzkettige Hydroxylverbindungen b2) die kurzkettigen Diole, wie z.B. 1,2-Ethandiol, 1,2-Propandiol, 1,3-Propandiol, 1,4-Butandiol, 1,5-Pentandiol, 1,6-Hexandiol, eingesetzt; ganz besonders bevorzugt ist 1,4-Butandiol.

Bevorzugte Hilfs- und Zusatzmittel (f) sind Rheologieverbesserer, Stabilisatoren, UV-Schutzmittel, Hydrolyseschutzmittel, Emulgatoren, einbaufähige Farbstoffe (die also über Zerewitinoff-aktive Wasserstoffatome verfügen) und/oder Farbpigmente, Füllstoffe, wie zum Beispiel Kreide, Ruß, Flammschutzmittel, Farbpasten, Mikrobenschutzmittel, Fließverbesserer, Thixotropiermittel, Oberflächenmodifizierungsmittel, Silikonöle, Entgasungshilfen und Verzögerer, die bei der Herstellung der Polyisocyanat-Polyadditionsprodukte eingesetzt werden können. Eine Übersicht ist in G. Oertel, Polyurethane Handbook, 2nd Edition, Carl Hanser Verlag, München, 1994, Kap. 3.4., enthalten.

Die Erfindung soll anhand der nachfolgenden Beispiele näher erläutert werden.

### Beispiele:

### Verwendete Rohstoffe:

1.) MDQ 23165: MDI-Prepolymer der Fa. Baule S.A.S., aufgebaut aus Poly(ethylen-co-butylen)adipat der Hydroxylzahl 56 mg KOH/g, Desmodur^{®} 44M und Desmodur CD-S mit einem Anteil an carbodiimidisiertem/uretoniminisiertem MDI von ca. 2 Gew.-% und einem NCO-Gehalt von 16,4 Gew.-%.
2.) Desmodur^{®} 44M: 4,4'-Diphenylmethandiisocyanat der Fa. Bayer MaterialScience AG mit einem NCO-Gehalt von ca. 33,5 Gew.-%.
3.) Desmodur^{®} CD-S: Polyisocyanat (carbodiimidisiertes/uretoniminisiertes Diphenylmethandiisocyanat auf Basis von 4,4'-Diphenylmethandiisocyanat) der Fa. Bayer MaterialScience AG mit einem NCO-Gehalt von ca. 29,5 Gew.-% und einem Anteil an carbodiimidisiertem/uretoniminisiertem MDI von ca. 23,5 Gew.-%.
4.) Baytec^{®} D22/70: Polyadipatpolyol der Fa. Bayer MaterialScience mit einer Hydroxylzahl von 59 mg KOH/g und einer Funktionalität von 2,06.
5.) 1,4-Butandiol: Fa. BASF
6.) Polycat^{©} SA-1/10: schaltbares Amidin der Fa. Air Products, welches laut Hersteller bei 80°C (gemessen in einem Polyethersystem) schaltet/latent ist; es besteht aus DBU und Phenol (1:1 molar)
7.) Dabco KTM 60: schaltbares Amin der Fa. Air Products, welches laut Hersteller bei 60°C (gemessen in einem Polyethersystem) schaltet/latent ist; es besteht aus DABCO und ist mit Phenol blockiert
8.) TIB KAT 214 (Dioctylzinndimercaptid) der Firma TIB Chemicals AG, Mannheim.
9.) Thorcat^{®} 535 (80% Phenyl-Hg-neodecanoat, 20% Neodecansäure); Fa. Thor Especialidades S.A.)
10.) UOP L-Paste der Firma UOP (Zeolith; Wasserfänger)
11.) Katalysator 1: Umsetzungsprodukt aus DBU mit Isocrotonsäure (Z-2-Butensäure) im molaren Verhältnis von 1:1 in 50 Gew.-% Diethylenglycol. Das Molgewicht aus dem äquimolaren Umsetzungsprodukt aus DBU (Molgewicht 152,24 g/mol) und Isocrotonsäure (Molgewicht 86,09 g/mol) beträgt 238,32 g/mol; es besteht zu 63,88 Gew.-% aus DBU; der Katalysator 1 enthält 31,94 Gew.-% DBU, da eine 50% Lösung in Diethylenglykol vorliegt. Ein typisches Handelsprodukt ist Toyocat DB40 der Fa. Tosoh Corporation.

### Verwendete Geräte und Analysenmethoden:

| | |
|---|---|
| Hydroxylzahl: | anhand der Norm DIN 53240 |
| | |
| Gew.% NCO: | anhand der Norm DIN 53185 |

Die Gießzeit wurde bestimmt, indem das Produkt in einen 400 g Becher nach Vernetzung gegossen wurde. Mit einem Stab wurde versucht, einen Faden zu ziehen. Sobald der Faden nicht mehr abreißt, ist die Gießzeit zu Ende (auch Becherfadenziehzeit genannt).

### DSC-Messung:

Die Schaltemperaturen wurden mit Hilfe der Differential-Thermoanalyse (DSC) ermittelt, indem eine den Katalysator enthaltende Reaktionsmischung mit einer Heizrate von 5°C/min im Temperaturintervall von 35 °C bis 180 °C aufgeheizt wurde. Die Temperatur, bei der die maximale Exothermie auftrat, wurde als Schalttemperatur (Deblockierungstemperatur) angegeben. Die Anfangstemperatur war die Temperatur, bei der die exotherme Reaktion einsetzte (Beginn der Exothermie). Ebenfalls wurde die Endtemperatur gemessen. Die Endtemperatur war die Temperatur, bei der die Exothermie (in W/g- Watt pro g Substanz) auf Höhe der Anfangstemperatur lag. Zusätzlich gab es besonders bei den blockierten Amidinen eine weitere Temperatur, die definiert ist als Entblockierungstemperatur. Hier wurde eine Tangente an die DSC Kurve gelegt. Diese Temperatur ist der Schnittpunkt der Tangenten. Mathematisch gesehen, liegt hier auch ein Wendepunkt vor. Dieser Punkt lag zwischen Deblockierungstemperatur und Endtemperatur.

100 Gew.-Teile MDQ 23165 (Raumtemperatur) wurden mit 180 Gew.-Teilen Baytec® D22/70 (vorgewärmt auf 60 °C), 9,1 Gew.-Teilen 1,4-Butandiol (bei Raumtemperatur) sowie demjeweiligen Katalysator vermischt, in eine DSC Kapsel bei Raumtemperatur gegeben und gemäß obiger Heizrate vermessen. Gemessen wurde die Heizrate in Watt/Gramm Reaktionsmischung (W/g) sowie die Temperatur.

### Herstellung eines Gießelastomeren

100 Gew.-Teile MDQ 23165 (vorgewärmt auf 45°C) wurden mit der entsprechenden Menge an Baytec® D22/70 (vorgewärmt auf 70°C) und dem Katalysator verrührt. Die entsprechende Menge an 1,4-Butandiol (vorgewärmt auf 45°C) wurde zugemischt. Die Reaktionsmischung wurde in eine vorgewärmte Form gegossen und nach einer gewissen Zeit entformt. Im Heizschrank wurde 16 Stunden bei 80 °C nachgetempert. Die Eigenschaften wurden nach 3 Wochen Lagerung bei Raumtemperatur bestimmt. Die Mengen, Rezepturen, Verfahrensparameter und Eigenschaften der Produkte sind den nachfolgenden Tabellen zu entnehmen

**Tabelle 1: Rezepturen und Verarbeitung**

| **Beispiele** | | | **1*** | **2*** | **3*** | **4** | **5** | **6** | **7** |
|---|---|---|---|---|---|---|---|---|---|
| Komponente a) | MDQ 23165 | [Gew.-Teile] | 100 | 100 | 100 | 100 | 100 | 100 | 100 |
| Komponente b1) | Baytec^{®} D22/70 | [Gew.-Teile] | 180 | 80 | 40 | 180 | 80 | 40 | 180 |
| Komponente b2) | Butandiol-1,4 | [Gew.-Teile] | 9,1 | 13,6 | 15,4 | 9,1 | 13,6 | 15,4 | 9,1 |
| Komponente h) | UOP^{®} L Paste | [Gew.-%, bez. auf Komponente b1)] | 2 | 2 | 2 | | | | 2 |
| Katalysatoren | Katalysator 1 | [ppm, bezogen auf Komponente b1)] | 200 | 200 | 200 | | | | 1000 |
| | TIB KAT 214 | [ppm, bezogen auf Komponente b1)] | | | 7 | | | | |
| | Thorcat 535 | [ppm, bezogen auf Komponente b1)] | | | | 1500 | 1500 | 1500 | |
| Formtemperatur | | [°C] | 80 | 80 | 100 | 100 | 100 | 100 | 80 |
| Gießzeit | | [min] | 5,30 | 6,0 | 4 | 6,0 | 6,0 | 4 | 1 |
| Entformungszeit | | [min] | 25 | 25 | 40 | 45 | 40 | 40 | 20 |
| Anfangsexothermie | aus DSC | [°C] und [W/g] | 36,1 und -0,092 | | | | | | |
| Deblockierungstemperatur | aus DSC | [°C] und [W/g] | 75,8 und -0,034 | | | | | | |
| Endblockierungstemperatur | aus DSC | [°C] und [W/g] | 120,4 und -0,066 | | | | | | |
| Endtemperatur | aus DSC | [°C] und [W/g] | 127,1 und -0,092 | | | | | | |
| Härte (bei 20°C) | DIN 53505 | [Shore A] | 60 | 85 | 95 | 60 | 85 | 95 | 60 |
| Härte (bei 80°C) | DIN 53505 | [Shore A] | 55 | 80 | 93 | 54 | 81 | 92 | 50 |
| 10% Modul | DIN 53504 | [MPa] | 0,5 | 2,1 | 6,7 | 0,7 | 2,4 | 6,2 | 0,5 |
| 100% Modul | DIN 53504 | [MPa] | 2,1 | 6,3 | 12 | 2,0 | 7,3 | 13,3 | 2,0 |
| 200% Modul | DIN 53504 | [MPa] | 2,9 | 9,6 | 14,0 | 2,6 | 10,3 | 16,3 | 2,6 |
| 300% Modul | DIN 53504 | [MPa] | 4,0 | 12,5 | 16,6 | 3,7 | 13,6 | 19,7 | 3,4 |
| Reißspannung | DIN 53504 | [MPa] | 42 | 45 | 34 | 40 | 49 | 41 | 29 |
| Reißdehnung | DIN 53504 | [%] | 650 | 615 | 640 | 600 | 650 | 550 | 700 |
| Weiterreißfestigkeit ohne Kerbe | DIN 53515 | [kN/m] | 51 | 100 | 144 | 45 | 109 | 137 | 51 |
| Weiterreißfestigkeit mit Kerbe | DIN 53515 | [kN/m] | 26 | 47 | 94 | 26 | 51 | 69 | 28 |
| Rückprallelastizität | DIN 53512 | [%] | 50 | 42 | 37 | 47 | 45 | 40 | 51 |
| Abriebsverlust | DIN 53516 | [mm³] | 35 | 40 | 50 | 35 | 45 | 45 | 40 |
| Druckverformungsrest 24h/70°C | DIN 53517 | [%] | 31 | 22 | 26 | 32 | 21 | 25 | 54 |
| Spezifische Dichte | | [g/mm³] | 1,22 | 1,24 | 1,25 | 1,21 | 1,21 | 1,21 | 1,24 |

**Tabelle 2: Rezepturen und Verarbeitung**

| **Vergleichsbeispiele** | | | **8** | **9** | **10** | **11** | **12** | **13** | **14** |
|---|---|---|---|---|---|---|---|---|---|
| Komponente a) | MDQ 23165 | [Gew.-Teile] | 100 | 100 | 100 | 100 | 100 | 100 | 100 |
| Komponente b1) | Baytec® D22/70 | [Gew.-Teile] | 180 | 180 | 180 | 180 | 180 | 180 | 180 |
| Komponente b2) | Butandiol-1,4 | [Gew.-Teile] | 9,1 | 9,1 | 9,1 | 9,1 | 9,1 | 9,1 | 9,1 |
| Katalysatoren | TIB KAT 214 | [ppm, bezogen auf b1)] | | | | | | | |
| | Polycat^{®} SA1/10 | [ppm, bezogen auf b1)] | | | | 2000 | 400 | | |
| | Katalysator 1 | [ppm, bezogen auf b1)] | 25 | 200 | 700 | | | | |
| | Dabco KTM60 | [ppm, bezogen auf b1)] | | | | | | 4000 | 400 |
| Komponente h) | UOP^{®} L Paste | [Gew.-%, bezogen auf b1)] | 2 | | | 2 | 2 | 2 | 2 |
| Formtemperatur | | [°C] | 80 | 80 | 80 | 80 | 80 | 80 | 80 |
| Gießzeit | | [min] | > 60 | > 60 | > 60 | 2 | > 60 | 2 | > 60 |
| Entformungszeit | | [min] | Nicht möglich | Nicht möglich | Nicht möglich | 20 | Nicht möglich | 20 | Nicht möglich |
| Anfangsexothermie | aus DSC | [°C] und [W/g] | | | | 41,8 und -0,085 | | 43,5 und -0,069 | |
| Deblockierungstemperatur | aus DSC | [°C] und [W/g] | | | | 79,3 und -0,028 | | 67,4 und -0,033 | |
| Endblockierungs temperatur | aus DSC | [°C] und [W/g] | | | | Nicht vorhanden | | Nicht vorhanden | |
| Endtemperatur | aus DSC | [°C] und [W/g] | | | | 132,2 und -0,085 | | 94,7 und - 0,069 | |

| | | | | | | | | | |
|---|---|---|---|---|---|---|---|---|---|
| * - erfindungsgemäßes Beispiel | | | | | | | | | |

### Bemerkungen zu den Ergebnissen in den Tabellen:

Zu 7: Zu viel an Katalysator 1 zerstört die mechanischen Eigenschaften des Produktes. Der Druckverformungsrest liegt im Beispiel 7 bei 54% und ist damit zu hoch (in Beispiel 1 nur bei 31% und in Beispiel 4 nur bei 32%). Die Härte bei 80°C liegt in Beispiel 7 bei 50 Shore A anstatt bei 55 Shore A in Beispiel 1 bzw. bei 54 Shore A in Beispiel 4. Die Menge an Katalysator (c) im Beispiel 7 beträgt 500 ppm, bezogen auf Komponente b1). Die Gießzeit von 1 Minute ist ziemlich kurz und für viele Gießelastomeranwendungen zu kurz.

Zu 8: Mit zu wenig an Katalysator 1 kann das Gießelastomer nicht mehr entformt werden. Die Menge an Katalysator (c), bezogen auf Komponente b1) entspricht 12,5 ppm. Der Ansatz wurde verworfen.

Zu 9 und 10: Ohne einen Wasserfänger ließen sich keine entformbaren Gießelastomere herstellen. Darüber hinaus war das Gemisch aus Komponente b1) und eingesetztem Katalysator nicht lagerstabil. Auch hohe Katalysatormengen (siehe Beispiel 10 mit 700 ppm an Katalysator 1 im Vergleich zu Beispiel 1 mit 200 ppm) führten zu keinem besseren Ergebnis. Die Ansätze mußten verworfen werden.

Zu 12 und 14: Mit den eingesetzten Katalysatoren war es nicht möglich, die entstandenen Elastomere zu entformen. Die Ansätze wurden verworfen.

Zu 11 und 13: Die Elastomere zeigten Schlieren und waren inhomogen. Die Härte variierte stark innerhalb des Elastomers. Die Gießzeit war deutlich kürzer als die Gießzeit der erfindungsgemäßen Elastomere. Längere Gießzeiten ließen sich mit weniger Menge an Katalysator (siehe Beispiele 12 und 14) nicht erreichen. Die Ansätze wurden verworfen.

Die Ergebnisse aus Tabelle 2 sowie Beispiel 7 in Tabelle 1 zeigen, dass mit den in diesen Vergleichsbeispielen eingesetzten Katalysatorkombinationen in keinem Fall Polyurethane mit guten mechanischen Eigenschaften hergestellt werden können. Nur mit den erfindungsgemäßen Katalysatoren können Elastomere mit guten Eigenschaften hergestellt werden (Beispiele 1 bis 3 in Tabelle 1). Die Vergleichsbeispiele 4 bis 6 (mit einem Quecksilberkatalysator - Schwermetallproblematik) weisen zu lange Entformungszeiten und teilweise liegt die Formtemperatur höher als bei den erfindungsgemäßen Elastomeren. Somit kann mit den erfindungsgemäßen Elastomeren nicht nur auf Quecksilber verzichtet werden, sondern auch ökonomischer produziert werden, da kürze Entformungszeiten eine schnellere Taktung in der Produktion ermöglichen.

## Patentansprüche

1. Polyisocyanat-Polyadditionsprodukte mit guten mechanischen Eigenschaften erhältlich aus
a) Polyisocyanaten und
b) NCO-reaktiven Verbindungen aus der Gruppe der b1) langkettigen Polyesterpolyole mit einer OH-Zahl von 27 bis 112 mg KOH/g und einer Funktionalität von 1,9 bis 2,3 und b2) kurzkettigen Hydroxylverbindungen mit einer OH-Zahl von 300 bis 1810 mg KOH/g und einer Funktionalität von 1,9 bis 2,3
in Gegenwart von
c) einem latenten Katalysator
d) gegebenenfalls weiteren von c) verschiedenen Katalysatoren und/oder Aktivatoren unter Zusatz von
e) gegebenenfalls Füllstoffen und/oder Fasermaterialien
f) gegebenenfalls Hilfs- und/oder Zusatzmitteln,
g) gegebenenfalls Treibmitteln
h) mindestens einem Wasserfänger,
**dadurch gekennzeichnet, dass** als latenter Katalysator (c) mit Monocarbonsäure blockierte Amidine in einer Menge von 20 bis 400 ppm, bezogen auf Komponente b1), eingesetzt werden, wobei das Molverhältnis von Amidin zu Carbonsäure zwischen 1 : 3 bis 1 : 0,5 liegt.

2. Polyisocyanat-Polyadditionsprodukte gemäß Anspruch 1, **dadurch gekennzeichnet, dass** als Katalysatoren (d) Zinnkatalysatoren verwendet werden.

3. Polyisocyanat-Polyadditionsprodukte gemäß Anspruch 1, **dadurch gekennzeichnet, dass** es sich bei den Polyisocyanaten (a) um NCO-Prepolymere aus Diphenylmethandiisocyanat (MDI) und/oder carbodiimidisiertem/uretoniminisiertem Diphenylmethandiisocyanat und/oder allophanatisiertem MDI handelt.

4. Polyisocyanat-Polyadditionsprodukte gemäß Anspruch 1, **dadurch gekennzeichnet, dass** es sich bei den Polyisocyanaten (a) um NCO-Prepolymere auf Basis von Polyesterpolyolen handelt.

5. Verfahren zur Herstellung der Polyisocyanat-Polyadditionsprodukte nach einem oder mehreren der Ansprüche 1 bis 4, wobei
a) Polyisocyanate mit
b) NCO-reaktiven Verbindungen aus der Gruppe der b1) langkettigen Polyesterpolyole mit einer OH-Zahl von 27 bis 112 mg KOH/g und einer Funktionalität von 1,9 bis 2,3 und b2) kurzkettigen Hydroxylverbindungen mit einer OH-Zahl von 300 bis 1810 mg KOH/g und einer Funktionalität von 1,9 bis 2,3
in Gegenwart von
c) einem latenten Katalysator
d) gegebenenfalls weiteren von c) verschiedenen Katalysatoren und/oder Aktivatoren unter Zusatz von
e) gegebenenfalls Füllstoffen und/oder Fasermaterialien
f) gegebenenfalls Hilfs- und/oder Zusatzmitteln,
g) gegebenenfalls Treibmitteln
h) mindestens einem Wasserfänger umgesetzt werden,
**dadurch gekennzeichnet, dass** als latenter Katalysator (c) mit Monocarbonsäure blockierte Amidine in einer Menge von 20 bis 400 ppm, bezogen auf Komponente b1), eingesetzt werden, wobei das Molverhältnis von Amidin zu Carbonsäure zwischen 1 : 3 bis 1 : 0,5 liegt.

6. Verfahren gemäß Anspruch 5, **dadurch gekennzeichnet, dass** der latente Katalysator (c) über die NCO-reaktiven Verbindungen b) und die Katalysatoren (d) separat zugegeben werden.

7. Verfahren gemäß Anspruch 5, **dadurch gekennzeichnet, dass** der latente Katalysator (c) sowie die Katalysatoren (d) über die NCO-reaktiven Verbindungen b) zugegeben werden.

8. Verfahren gemäß Anspruch 5, **dadurch gekennzeichnet, dass** der latente Katalysator (c) und ein Teil der Katalysatoren (d) über die NCO-reaktiven Verbindungen b) und der Rest der Katalysatoren (d) separat zugegeben werden.

9. Verwendung der Polyisocyanat-Polyadditionsprodukte nach einem oder mehreren der Ansprüche 1 bis 4 zur Herstellung von Sieben, Molchen, Rollen, Rädern, Walzen, Abstreifern, Platten, Zyklonen, Förderbändern, Rakeln, Kupplungen, Dichtungen, Bojen und Pumpen.

## Claims

1. Polyisocyanate polyaddition products with good mechanical properties, obtainable from
a) polyisocyanates and
b) NCO-reactive compounds from the group of b1) long-chain polyester polyols having an OH number of 27 to 112 mg KOH/g and a functionality of 1.9 to 2.3 and b2) short-chain hydroxyl compounds having an OH number of 300 to 1810 mg KOH/g and a functionality of 1.9 to 2.3,
in the presence of
c) a latent catalyst
d) optionally further catalysts other than c) and/or activators, with addition of
e) optionally fillers and/or fiber materials
f) optionally assistants and/or additives,
g) optionally blowing agents,
h) at least one water scavenger,
**characterized in that** the latent catalyst (c) used comprises monocarboxylic acid-blocked amidines in an amount of 20 to 400 ppm, based on component b1), the molar ratio of amidine to carboxylic acid being between 1:3 and 1:0.5.

2. Polyisocyanate polyaddition products according to Claim 1, **characterized in that** the catalysts (d) used are tin catalysts.

3. Polyisocyanate polyaddition products according to Claim 1, **characterized in that** the polyisocyanates (a) are NCO prepolymers formed from diphenylmethane diisocyanate (MDI) and/or carbodiimidized/uretoniminized diphenylmethane diisocyanate and/or allophanatized MDI.

4. Polyisocyanate polyaddition products according to Claim 1, **characterized in that** the polyisocyanates (a) are NCO prepolymers based on polyester polyols.

5. Process for preparing the polyisocyanate polyaddition products according to one or more of Claims 1 to 4, by reacting
a) polyisocyanates with
b) NCO-reactive compounds from the group of b1) long-chain polyester polyols having an OH number of 27 to 112 mg KOH/g and a functionality of 1.9 to 2.3 and b2) short-chain hydroxyl compounds having an OH number of 300 to 1810 mg KOH/g and a functionality of 1.9 to 2.3,
in the presence of
c) a latent catalyst
d) optionally further catalysts other than c) and/or activators, with addition of
e) optionally fillers and/or fiber materials
f) optionally assistants and/or additives,
g) optionally blowing agents,
h) at least one water scavenger,
**characterized in that** the latent catalyst (c) used comprises monocarboxylic acid-blocked amidines in an amount of 20 to 400 ppm, based on component b1), the molar ratio of amidine to carboxylic acid being between 1:3 and 1:0.5.

6. Process according to Claim 5, **characterized in that** the latent catalyst (c) is added via the NCO-reactive compounds b) and the catalysts (d) are added separately.

7. Process according to Claim 5, **characterized in that** the latent catalyst (c) and the catalysts (d) are added via the NCO-reactive compounds b).

8. Process according to Claim 5, **characterized in that** the latent catalyst (c) and a portion of the catalysts (d) are added via the NCO-reactive compounds b) and the rest of the catalysts (d) are added separately.

9. Use of the polyisocyanate polyaddition products according to one or more of Claims 1 to 4 for production of screens, pipeline pigs, rolls, wheels, rollers, strippers, plates, cyclones, conveyor belts, coating bars, couplings, seals, buoys and pumps.

## Revendications

1. Produits de polyaddition de polyisocyanate présentant de bonnes propriétés mécaniques, pouvant être obtenus à partir de
a) des polyisocyanates et
b) des composés réactifs avec NCO du groupe b1) des polyester-polyols à chaîne longue ayant un indice OH de 27 à 112 mg KOH/g et une fonctionnalité de 1,9 à 2,3, et b2) des composés hydroxyle à chaîne courte ayant un indice OH de 300 à 1 810 mg KOH/g et une fonctionnalité de 1,9 à 2,3,
en présence de
c) un catalyseur latent,
d) éventuellement d'autres catalyseurs et/ou activateurs différents de c),
avec ajout de
e) éventuellement des charges et/ou des matériaux fibreux,
f) éventuellement des adjuvants et/ou additifs,
g) éventuellement des agents gonflants,
h) au moins un capteur d'eau,
**caractérisés en ce que** des amidines bloquées avec un acide monocarboxylique sont utilisées en tant que catalyseur latent (c) en une quantité de 20 à 400 ppm, par rapport au composant b1), le rapport en moles entre l'amidine et l'acide carboxylique étant compris entre 1:3 et 1:0,5.

2. Produits de polyaddition de polyisocyanate selon la revendication 1, **caractérisés en ce que** des catalyseurs d'étain sont utilisés en tant que catalyseurs (d).

3. Produits de polyaddition de polyisocyanate selon la revendication 1, **caractérisés en ce que** les polyisocyanates (a) sont des prépolymères de NCO constitués de diisocyanate de diphénylméthane (MDI) et/ou de diisocyanate de diphénylméthane carbodiimidé/uretoniminé et/ou de MDI allophanaté.

4. Produits de polyaddition de polyisocyanate selon la revendication 1, **caractérisés en ce que** les polyisocyanates (a) sont des prépolymères de NCO à base de polyester-polyols.

5. Procédé de fabrication des produits de polyaddition de polyisocyanate selon une ou plusieurs des revendications 1 à 4, dans lequel
a) des polyisocyanates sont mis en réaction avec
b) des composés réactifs avec NCO du groupe b1) des polyester-polyols à chaîne longue ayant un indice OH de 27 à 112 mg KOH/g et une fonctionnalité de 1,9 à 2,3, et b2) des composés hydroxyle à chaîne courte ayant un indice OH de 300 à 1 810 mg KOH/g et une fonctionnalité de 1,9 à 2,3,
en présence de
c) un catalyseur latent,
d) éventuellement d'autres catalyseurs et/ou activateurs différents de c),
avec ajout de
e) éventuellement des charges et/ou des matériaux fibreux,
f) éventuellement des adjuvants et/ou additifs,
g) éventuellement des agents gonflants,
h) au moins un capteur d'eau,
**caractérisé en ce que** des amidines bloquées avec un acide monocarboxylique sont utilisées en tant que catalyseur latent (c) en une quantité de 20 à 400 ppm, par rapport au composant b1), le rapport en moles entre l'amidine et l'acide carboxylique étant compris entre 1:3 et 1:0,5.

6. Procédé selon la revendication 5, **caractérisé en ce que** le catalyseur latent (c) est ajouté par le biais des composés réactifs avec NCO b) et les catalyseurs (d) sont ajoutés séparément.

7. Procédé selon la revendication 5, **caractérisé en ce que** le catalyseur latent (c), ainsi que les catalyseurs (d) sont ajoutés par le biais des composés réactifs avec NCO b).

8. Procédé selon la revendication 5, **caractérisé en ce que** le catalyseur latent (c) et une partie des catalyseurs (d) sont ajoutés par le biais des composés réactifs avec NCO b) et le reste des catalyseurs (d) est ajouté séparément.

9. Utilisation des produits de polyaddition de polyisocyanate selon une ou plusieurs des revendications 1 à 4 pour la fabrication de tamis, de racleurs, de rouleaux, de roues, de cylindres, de râteaux, de plaques, de cyclones, de bandes de transport, de racles, de couplages, de joints, de bouées et de pompes.
